# EUROPÄISCHE PATENTSCHRIFT

(11) **EP 0 633 902 B1**
(45) Veröffentlichungstag und Bekanntmachung des Hinweises auf die Patenterteilung: **12.06.1996**
(21) Anmeldenummer: 93906502.5
(22) Anmeldetag: 11.03.1993
(51) Int. Cl.: C08F 299/00, C08B 31/00, C08H 1/06

(54) **BIOLOGISCH ABBAUBARES, WASSERRESISTENTES POLYMER-MATERIAL**
BIODEGRADABLE, WATER RESISTANT POLYMER MATERIAL
MATIERE POLYMERE RESISTANTE A L'EAU ET BIODEGRADABLE

(30) Priorität: 30.03.1992 DE 4210334
(43) Veröffentlichungstag der Anmeldung: 18.01.1995
(73) Patentinhaber: Deutsche Gelatine-Fabriken Stoess AG, 69412 Eberbach (DE)
(72) Erfinder: KOEPFF, Peter, D-6900 Heidelberg (DE); BRÄUMER, Klaus, D-6930 Eberbach (DE); BABEL, Wilfried, D-6930 Eberbach (DE)
(74) Vertreter: Wössner, Gottfried
(86) Internationale Anmeldenummer: EP9300563
(87) Internationale Veröffentlichungsnummer: WO9320119

(56) Entgegenhaltungen:
- EP-A- 0 117 478
- FR-A- 2 140 541
- FR-A- 2 160 965
- FR-A- 2 291 788
- US-A- 3 346 408
- US-A- 4 451 613

## Beschreibung

Die Erfindung betrifft ein biologisch abbaubares, wasserresistentes Polymer-Material, insbesondere in Form von Folien, Filmen, Bändern, Massen, Formkörpern oder dergleichen.

Die bislang in der Literatur beschriebenen Verfahren zur Herstellung von wasserresistenten Polymeren auf der Basis von natürlichen Polymer-Materialien, wie z.B. Gelatine oder Leim, beschränken sich auf die Technik der Pfropf-Copolymerisation (radikalische Reaktion) von ungesättigten Verbindungen oder Gemischen ungesättigter Verbindungen in Gegenwart der Biopolymere. Bei diesen Verfahren entstehen wenig charakterisierbare Produktgemische aus Pfropf-Copolymeren, Homo- bzw. Copolymeren ohne Gelatineanteil und nicht modifizierter Gelatine, die aufgrund wechselnder Produktzusammensetzungen eine zuverlässige und reproduzierbare Anwendungstechnik erschweren.

Aufgabe der vorliegenden Erfindung ist es, ein Polymer-Material vorzuschlagen, welches mit definierten Materialeigenschaften herstellbar ist.

Diese Aufgabe wird erfindungsgemäß durch ein biologisch abbaubares, wasserresistentes Polymer-Material gelöst, welches mittels eines Verfahrens mit den folgenden Schritten hergestellt ist:
a) Zumindest teilweises Derivatisieren von Polysacchariden und/oder Polypeptiden an ihren Hydroxyl-, Amino-, Imino-, Thiol- und/oder Carboxylgruppen in einer nichtradikalischen Reaktion mit einem vernetzbare Gruppen enthaltenden Agens zu einem unvernetzten Reaktionsprodukt und
b) Umsetzen des unvernetzten Reaktionsproduktes aus Schritt a) unter Vernetzung der vernetzbaren Gruppen zu einem Vernetzungsreaktionsprodukt.

Bei dem erfindungsgemäßen biologisch abbaubaren, wasserresistenten Polymer-Material handelt es sich also um ein Material, welches im wesentlichen aus einem Vernetzungsreaktionsprodukt von Polysacchariden und/oder Polypeptiden besteht, deren Hydroxyl-, Amino-, Imino-, Thiol- und/oder Carboxyl-Gruppen in einer nichtradikalischen Reaktion zumindest teilweise mit Agentien derivatisiert sind, welche in einem der Derivatisierung nachfolgenden und davon getrennt durchführbaren Verfahrensschritt vernetzbare Gruppen umfassen.

Während bei der Pfropf-Copolymerisation eine Derivatisierungsreaktion und eine Vernetzungsreaktion der für die Derivatisierung verwendeten Reagenzien untereinander parallel und unkontrollierbar ablaufen, wählt die vorliegende Erfindung eine zweistufige Herstellungsmethode, bei der gezielt zunächst in einer nichtradikalischen Reaktion ein derivatisiertes Polysaccharid oder Polypeptid erhalten wird, welches dann gegebenenfalls unter Zusatz von weiteren Monomeren eine gezielte Polyreaktion eingehen kann, die nicht nur die Polymerisation, sondern auch die Polykondensation und die Polyaddition als Reaktionsmechanismen einschließt.

Die so erhaltenen biologisch abbaubaren, wasserresistenten Polymer-Materialien lassen sich genau auf ihren Einsatzzweck mit ihren Eigenschaften hin zuschneiden. Je nach Wahl der Reaktionsbedingungen, wie Substratkonzentration, Derivatisierungsgrad und Polymerisationsbedingungen, erhält man die wasserunlöslichen bzw. wasserresistenten, aber noch biologisch abbaubaren Polymere, die sich als Formkörper, Beschichtungen, insbesondere auch als Verpackungsmaterialien einsetzen lassen.

Die hochmolekularen Produkte sind aufgrund ihrer polaren Strukturmerkmale (Aminosäuren, Saccharide) sowohl in hydrophilen Medien, wie z.B. Wasser und Alkohole oder dergleichen, als auch in hydrophoben Solventien, wie z.B. halogenierte Kohlenwasserstoffe, Ether, Ketone, etc., unlöslich, behalten jedoch die Eigenschaft, in polaren Lösungsmitteln zumindest teilweise quellbar zu sein.

Trotz der Derivatisierung und der Vernetzung weisen diese hochmolekularen Biopolymeren immer noch ihre ursprüngliche Eigenschaft auf, durch entsprechend aerob oder anaerob wirkende Enzymsysteme zu oligomeren und monomeren Einheiten abgebaut zu werden, und zwar in einem Zeitrahmen, der eine Kompostierung dieser Polymer-Materialien erlaubt.

Vorzugsweise werden die vernetzbaren Gruppen Acryl- und/oder Methacryl-Reste umfassen.

Als Agentien kommen insbesondere Glycidylacrylate und/oder Glycidylmethacrylate in Frage.

Bei der Auswahl der Polypeptide werden insbesondere solche kollagenen Ursprungs bevorzugt, insbesondere in Form von Gelatine, tierischen Leimen, Kollagen oder Kollagenhydrolysat. Daneben können aber auch andere Bio-Polypeptide, wie z.B. Molkenproteine und/oder Caseine, Pflanzenproteine, insbesondere Sojaproteine, einzeln oder in Mischung, auch in Mischung mit den Polypeptiden kollagenen Ursprungs, verwendet werden.

Unter den Begriff Gelatine sollen nach der hier verwendeten Definition sowohl Produkte fallen, die nach dem einstufigen Typ A-Verfahren gewonnen wurden, als auch solche, die nach dem zweistufigen alkalischen Verfahren gewonnen wurden und ein Geliervermögen von 40 bis 320 g aufweisen (British Standard).

Daneben eignen sich als Ausgangsmaterialien zur Herstellung hochmolekularer Biopolymere ungereinigte kollagene Rohextrakte in Form von Haut- oder Knochenleimen. Nicht gelierende Kollagenprodukte, sogenannte Kollagenhydrolysate, die durch physikalische (Druck, Temperatur), chemische (z.B. mittels Säure oder Lauge) oder biologische Verfahren (enzymatisch) aus kollagenreichem Rohmaterial wie Haut oder Knochen gewonnen wurden, eignen sich ebenfalls als Ausgangsmaterial zur Herstellung der erfindungsgemäßen, hochmolekularen Biopolymer-Materialien. Um eine ausreichende Wasserresistenz zu erreichen, sollten im Mittel mindestens zehn vernetzbare Gruppen pro tausend Monosaccharid- bzw. Aminosäure-Gruppen der Polysaccharid- bzw. Polypeptid-Ketten vorhanden sein.

Beim Polypeptid-Anteil wird bevorzugt, wenn die vernetzbaren Gruppen im wesentlichen ausschließlich über Amino- und Carboxyl-Gruppen mit der Polypeptid-Kette verknüpft sind.

Für verschiedene Anwendungsbereiche der Polypeptid-Materialien hat es sich als günstig herausgestellt, wenn die vernetzbaren Gruppen des Polypeptid-Anteils im wesentlichen ausschließlich über die Carboxyl-Gruppen mit der Polypeptid-Kette verknüpft sind.

Generell wird eine ausreichende Wasserresistenz und Zugfestigkeit bei den Polymer-Materialien beobachtet, wenn im Mittel bis zu 150 vernetzbare Gruppen pro tausend Aminosäuren der Polypeptid-Ketten vorhanden sind.

Wird das Polymer-Material aus einer Mischung von Polysaccharid- und Polypeptid-Anteilen aufgebaut, so werden vorzugsweise diese Anteile miteinander vernetzt vorliegen. Bevorzugt wird die Vernetzungsreaktion bis zur gänzlichen Wasserunlöslichkeit des Vernetzungsreaktionsproduktes weitergeführt, wobei andererseits bevorzugt darauf geachtet wird, daß das Vernetzungsreaktionsprodukt immer noch in gewissen Grenzen wasserquellbar ist. Wasserquellbarkeit erleichtert die Abbaureaktion bei der Kompostierung der Polymer-Materialien.

Zur weiteren Modifizierung der mechanischen Eigenschaften der Polymer-Materialien kann vorgesehen sein, daß die Vernetzungsreaktion in Gegenwart von freiem Monomer und/oder Präpolymer der Agentien hergestellt wird. Damit läßt sich die Länge der Brücken zwischen zwei Polymermolekülen beeinflussen und somit auch der strukturelle Aufbau des Polymermaterials selbst.

Die chemischen und mechanischen Eigenschaften der erfindungsgemäßen Polymer-Materialien lassen sich insbesondere dadurch sehr genau einstellen, wenn vor der Derivatisierung Teile der funktionellen Gruppen der Polysaccharide und/oder Polypeptide mit Schutzgruppen blockiert werden. Hier kann mit in der Biochemie üblichen Schutzgruppen gearbeitet werden, die selektiv die gewünschten funktionellen Gruppen für die Derivatisierung verfügbar lassen.

In Spezialfällen hat sich als vorteilhaft herausgestellt, wenn als derivatisierte Polysaccharide und/oder Polypeptide mindestens teilweise solche Derivatisierungsprodukte verwendet werden, welche unterschiedliche vernetzbare Gruppen umfassen, gegebenenfalls in derselben Molekülkette, welche unterschiedlichen Vernetzungsreaktionstypen zugänglich sind.

Dies erschließt die Möglichkeit, ein vernetztes Polymer-Material herzustellen, welches in einer späteren Reaktion vollends ausgehärtet werden kann bzw. mit anderen Materialien, zumindest an der Grenzfläche, noch chemische Reaktionen eingehen kann.

Diese und weitere Vorteile der Erfindung werden anhand der folgenden Beispiele noch näher erläutert.

### Derivatisierung der kollagenen Ausgangsmaterialien

Der Derivatisierungsschritt der weiter oben aufgeführten kollagenen Ausgangsmaterialien beinhaltet deren Umsetzung in wässriger Lösung im Konzentrationsbereich von 1 bis 70 Gew. %, wobei Gelatinen je nach Qualität bevorzugt in Konzentrationen von 1 bis 30 Gew. %, Leim von 10 bis 40 Gew. % und nicht gelierende Kollagenhydrolysate von 20 bis 70 Gew. % eingesetzt werden.

Als Modifizierungsreagenzien dienen bevorzugt reaktive Acrylate oder Methacrylate vom Typ des Glycidylacrylats bzw. Glycidylmethacrylats, die bei pH-Werten von 4,0 bis 10,0 spezifisch mit γ- bzw. β-Carboxyl-Gruppen der Aminosäureseitenketten von Glutaminsäure und Asparginsäure und mit ε-Aminosäureketten von Lysin und Hydroxylysin reagieren.

Die Menge des Modifizierungsreagenzes liegt zwischen 0,1 und 30 Gew. % (bezogen auf das Polypeptid-Gewicht), bevorzugt zwischen 1 und 25 Gew. % (jeweils bezogen auf das Polypeptid-Gewicht). Je nach Gelatinetyp können die Gehalte der zur Verfügung stehenden reaktiven Gruppen der Gelatine variieren:
- Typ A-Gelatine enthält 85 mMol/100 g an sauren Aminosäureresten (Glutamin- und Asparaginsäure).
- Typ B-Gelatine enthält infolge der bei der alkalischen Konditionierung des kollagenhaltigen Rohmaterials erfolgenden Desamidierung von Glutamin bzw. Asparginin zu Glutaminsäure bzw. Asparaginsäure 127 mMol saure Aminosäurereste pro 100 g Gelatine.

Der Gehalt an basischen Aminosäureresten (Lysin und Hydroxylysin) ist mit 38 mMol/100 g in beiden Gelatinetypen gleich und wird durch die alkalische Behandlung des Rohmaterials nicht verändert (vgl. "The Science and Technology of Gelatin", A.G. Ward, A. Courts Ed; Academic Press 1977).

Die Reaktionstemperatur bei der Derivatisierung liegt bevorzugt bei 30 bis 80° C, weiter bevorzugt im Bereich von 40 bis 60° C. Die Obergrenze der Temperaturbereiche ergibt sich dadurch, daß man die bei höheren Temperaturen vorkommende erhöhte Neigung zur Hydrolyse des Glycidylreagenzes zum Diol vermeiden sollte.

Als Reaktionsprodukte bilden sich im Falle der Derivatisierung an den sauren Aminosäureseitengruppen die entsprechenden Ester - im Falle der Modifizierung der basischen Aminosäureseitengruppen die entsprechenden 1,3-Alkanolaminoderivate zwischen den polypeptid-gebundenen Reaktionspartnern und den reaktiven Acrylaten bzw. Methacrylaten.

Im folgenden wird anhand eines allgemeinen Reaktionsschemas das Verfahren zur Herstellung der erfindungsgemäßen Polymer-Materialien mittels zweier getrennter Schritte, der Derivation und Copolymerisation, noch näher beschrieben:

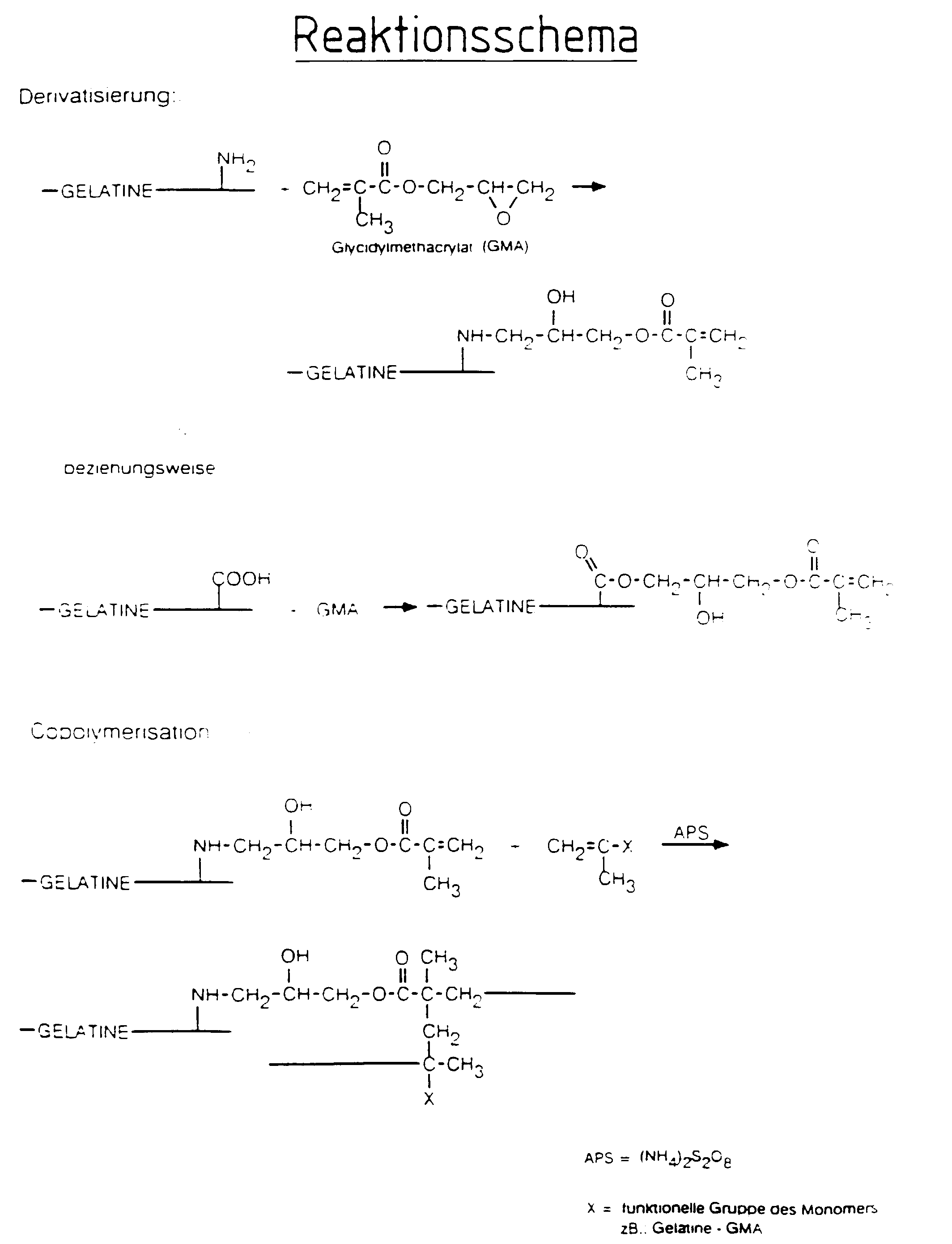

Das skizzierte Reaktionsschema zur Herstellung von erfindungsgemäßen Biopolymer-Materialien verdeutlicht eindrucksvoll die gezielte Herstellbarkeit der erfindungsgemäßen Polymer-Materialien, während bei der Pfropf-Coplymerisation aufgrund deren radikalischem Reaktionsmechanismus eine Vielzahl unterschiedlicher Reaktionsprodukte zu einem komplexen Reaktionsproduktgemisch erfolgt.

Das erfindungsgemäße zweistufige Verfahren der Derivatisierung und separaten Polyreaktion zur Vernetzung der derivatisierten Biopolymeren eröffnet mannigfaltige Möglichkeiten zur gezielten, maßgeschneiderten Synthese wasserresistenter Polymere auf der Basis kollagener Ausgangsmaterialien bzw. auf der Basis von Polysacchariden oder Mischungen aus beiden.

Je nach den für die Modifizierung gewählten pH-Bedingungen und Derivatisierungsgraden von maximal 25 Gew. % (bezogen auf das Polypeptid- bzw. Polysaccharid-Gewicht) erhält man wasserlösliche Produkte, die direkt oder nach erfolgter Trocknung durch geeignete Polymerisationsverfahren, wie Redox-, thermische oder UV-Behandlung, zu wasserunlöslichen, aber noch quellbaren Produkten wie Folienbänder und Formkörper umwandelbar sind.

Durch die Verdünnbarkeit mit Wasser und die Verträglichkeit der wässrigen Lösungen von glycidylacrylat- oder glycidylmethacrylat-modifizierten Gelatinen, Leimen oder Hydrolysaten vor der Polymerisation mit einigen organischen Lösungsmitteln, wie Aceton, Alkanolen und Polyolen (Gehalt an gelösten Produkten bis ca. 50 Gew. %), lassen sich allein oder in Kombination mit weiteren Latices vielfältige Beschichtungs- und Klebeaufgaben im Bereich Papier, Pappe, Holz, Synthetic-Materialien und Metall realisieren.

Das Hauptstrukturelement der beschriebenen wasserunlöslichen, hochmolekularen Produkte besteht aus Protein bzw. Polypeptid-Ketten und/oder Polysacchariden; die daraus hergestellten Produkte sind durch die proteolytische Wirkung von aerob und anaerob wirkenden Mikroorganismen biologisch abbaubar.

Zur Applikation der wässrigen, noch nicht polymerisierten Gelatineacrylat- bzw. Gelatinemethacrylatlösungen bzw. -Dispersionen sind alle gängigen Verarbeitungstechniken, wie Sprühen, Walzen, Gießen, Rakelauftrag geeignet. Gleiches gilt auch für die erfindungsgemäßen Polysaccharidsysteme. Zur weiteren Modifikation der Produkteigenschaften der hochpolymeren Verbindungen eignen sich weitere Comonomere mit folgenden Zielen:
- Hydrophobierung: Acrylsäureester, Methacrylsäureester
- Kationisierung: Trimethylammoniumpropylmethacrylamid-Chlorid
- Anionisierung: Acrylsäure, Methacrylsäure.

### Beispiel 1

1. 100 g Typ B-Gelatine (Knochen 270 Bloom) werden bei 50° C mit 900 g Wasser bei 50° C gelöst, der pH-Wert mit 1 n NaOH auf 8,5 eingestellt und unter Rühren mit 4,45 ml Glycidylmethacrylat (GMA) versetzt und 1 h bei 50° C gerührt. Diese GMA-Menge entspricht dem Gehalt von 38 mMol Lysin und Hydroxylysin/100 g Gelatine, d.h. theoretisch einem molaren Umsatz (bezüglich Gehalt an Lysin und Hydroxylysin). Nach einstündigem Rühren bei 50° C wird der pH-Wert durch Zugabe von 2 n H₂SO₄ auf 7,0 eingestellt. Die Gelatinelösung kann bei Bedarf mit geeigneten Methoden (Ionenaustausch, Membranfiltration u.a.) entsalzt, konzentriert und getrocknet bzw. polymerisiert werden.

### Beispiel 2

Vorgehen wie bei Beispiel 1, jedoch unter Verwendung von Typ A-Gelatine (250-300 Bloom).

### Beispiel 3

300 g Typ B-Gelatine (Knochen 100 Bloom) werden mit 700 g Wasser bei 50° C gelöst; der pH-Wert mit 1 n NaOH auf 8,5 eingestellt und unter Rühren mit 13,35 ml Glycidylmethacrylat versetzt (äquimolarer Ansatz bezüglich theoretischem Gehalt an Lysin und Hydroxylysin) und 1 h bei 50° C gerührt. Die weitere Verarbeitung erfolgt wie im Beispiel 1.

### Beispiel 4

Vorgehen wie im Beispiel 3; aber mit Typ A-Gelatine (100 Bloom).

### Beispiel 5

Eine 50 %ige Kollagenhydrolysatlösung ("Gelita-Sol" von Deutsche Gelatine-Fabriken Stoess AG) wird bei 50° C mit 1 n NaOH auf pH 8,5 eingestellt und unter Rühren mit 5 Gew. % Glycidylmethacrylat versetzt und 1 h bei 50° C gerührt. Danach wird der pH-Wert mit 2 n H₂SO₄ auf 7,0 eingestellt. Die modifizierte Eiweißlösung kann, mit oder ohne vorherige Entsalzung, getrocknet (Sprühtrocknung, Lyophilisation) oder polymerisiert werden.

### Beispiel 6

Die nach Beispiel 1 bis 5 hergestellten Eiweißlösungen werden bei 70° C mit 0,5 Gew. % Na₂S₂O₈ (als 10 % wässrige Lösung) versetzt - es bilden sich innerhalb von 0,5 bis 2 Minuten wasserunlösliche Polymergele unterschiedlicher Festigkeit.

### Beispiel 7

Die nach Beispiel 1 bis 4 hergestellten Gelatinelösungen werden mit 0,25 Gew. % eines geeigneten UV-Initiators versetzt (z.B. Irgacure 651, Firma Ciba-Geigy, als 10 %ige Lösung in Aceton) mit einem Rakelgerät als 100-500 µm dicke Naßschicht auf inerte Trägerfolien wie Polyester, Polymethacrylat, aufgetragen und 2 Minuten UV-belichtet (Typ Heraeus NN 1544 VK, 15 W). Nach dem Trocknen entstehen transparente, wasserunlösliche Filme.

### Beispiel 8

Durch Zusatz von Polyolen (Glycerin, Sorbit, Polyethylenglykole) als Weichmacher zu den Gießlösungen aus Beispiel 7) in Konzentration von 10 bis 40 % (bezüglich Gelatinegewicht) entstehen äußerst flexible, wasserunlösliche Folien.

### Beispiel 9

600 g Wachsmaisstärke (hoch amylopektinhaltig; Typ Amioca AJH-504, National Starch) werden bei 50° C in einer Lösung von 120 g Na₂SO₄ und 800 ml Wasser suspendiert. Der pH-Wert wird durch Zugabe von 50 %iger NaOH auf 10,5 bis 11,0 eingestellt. Zur Erzielung eines Stärke-Substitutionsgrades (DS = Degree of Substitution) von 0,03 - d.h. 1 % der in der Stärke vorhandenen freien Hydroxylgruppen der Anhydroglucoseeinheiten - werden langsam 13 ml Glycidylmethacrylat zugefügt. Nach einer Reaktionszeit von 2 Stunden bei 50° C wird der pH-Wert auf 7,0 erniedrigt, die Stärke abgenutscht, mit Wasser mehrfach nachgewaschen und im Umlufttrockenschrank bei 40-45° C getrocknet.

### Beispiel 10

10 g der nach Beispiel 9 hergestellten, Glycidylmethacrylat-modifizierten Wachsmaisstärke wird als 10 %ige wässrige Dispersion 30 Minuten bei 70° C vorverkleistert und unter Rühren mit 0,5 % Na₂S₂O₈ (bezüglich Ansatz) homopolymerisiert. Nach ca. 5 Minuten kommt es zu einem drastischen Anstieg der Viskosität - nach weiteren 5 Minuten ist der hochviskose Ansatz nicht mehr rührfähig.

### Beispiel 11

Zu 10 g der nach Beispiel 2 Glycidylmethacrylat-modifizierten 270 Bloom Typ A-Gelatine, die bei 70° C in 180 ml Wasser gelöst wurde, wird unter Rühren langsam 10 g der nach Beispiel 9 hergestellten Glycidylmethacrylat-modifizierten Wachsmaisstärke untergerührt. Die Copolymerisation wird durch Zugabe von 10 ml einer wässrigen 10 % Na₂S₂O₈-Lösung gestartet. Nach ca. 5 Minuten Rühren bildet sich ein wasserunlösliches Polymergel.

### Beispiel 12

Die nach Beispiel 6 bis 11 hergestellten hochmolekularen Biopolymeren sind in einem in vitro-Testverfahren biologisch abbaubar: Folien oder Granulate werden in 0,1 % HCl bei 37° C mit 2 Gew. % Pepsin inkubiert. Je nach Derivatisierungsgrad und Polymerisationsbedingungen haben sich die polymeren Substanzen innerhalb von 2 h bis zu 7 d vollständig aufgelöst.

### Beispiel 13

Die Verrottbarkeit von hochmolekularen, wasserresistenten Bio-Polymerfolien (hergestellt durch UV-Härtung einer 270 Bloom Knochengelatinefolie, derivatisiert mit 5 Gew. % GMA) kann durch einen praxisnahen Test dokumentiert werden: man umhüllt einen Teststreifen mit einer standardisierten Blumenerde und inkubiert bei 40° C; nach 4 Wochen war die Folie rückstandsfrei zerfallen.

## Patentansprüche

1. Biologisch abbaubares, wasserresistentes Polymer-Material in Form von Folien, Filmen, Bändern, Massen, Formkörpern oder dergleichen, hergestellt in einem Verfahren, welches die Schritte umfaßt:
a) Zumindest teilweises Derivatisieren von Polysacchariden und/oder Polypeptiden an ihren Hydroxyl-, Amino-, Imino-, Thiol- und/oder Carboxylgruppen in einer nichtradikalischen Reaktion mit einem vernetzbare Gruppen enthaltenden Agens zu einem unvernetzten Reaktionsprodukt und
b) Umsetzen des unvernetzten Reaktionsproduktes aus Schritt a) unter Vernetzung der vernetzbaren Gruppen zu einem Vernetzungsreaktionsprodukt.

2. Polymer-Material nach Anspruch 1, dadurch gekennzeichnet, daß die vernetzbaren Gruppen Acryl- und/oder Methacrylreste umfassen.

3. Polymer-Material nach Anspruch 2, dadurch gekennzeichnet, daß die Agentien Glycidylacrylate und/oder Glycidylmethacrylate umfassen.

4. Polymer-Material nach einem der Ansprüche 1 bis 3, dadurch gekennzeichnet, daß die Polypeptide kollagenen Ursprungs, insbesondere Gelatine, tierische Leime, Kollagen oder Kollagenhydrolysat und/oder Molkenproteine, Caseine, Pflanzenproteine, insbesondere Sojaproteine, sind.

5. Polymer-Material nach einem der Ansprüche 1 bis 4, dadurch gekennzeichnet, daß im Mittel mindestens 10 vernetzbare Gruppen pro 1000 Monosaccharide bzw. Aminosäuren der Polysaccharid- bzw. Polypeptidketten vorhanden sind.

6. Polymer-Material nach einem der Ansprüche 1 bis 5, dadurch gekennzeichnet, daß die vernetzbaren Gruppen des Polypeptidanteils im wesentlichen ausschließlich über Amino- und Carboxylgruppen mit der Polypeptidkette verknüpft sind.

7. Polymer-Material nach einem der Ansprüche 1 bis 5, dadurch gekennzeichnet, daß die vernetzbaren Gruppen des Polypeptidanteils im wesentlichen ausschließlich über Carboxylgruppen mit der Polypeptidkette verknüpft sind.

8. Polymer-Material nach einem der Ansprüche 1 bis 7, dadurch gekennzeichnet, daß im Mittel bis zu 150 vernetzbare Gruppen pro 1000 Aminosäuren der Polypeptidketten vorhanden sind.

9. Polymer-Material nach einem der Ansprüche 1 bis 8, dadurch gekennzeichnet, daß die Polysaccharidanteile mit den Polypeptidanteilen vernetzt sind.

10. Polymer-Material nach einem der Ansprüche 1 bis 9, dadurch gekennzeichnet, daß die Vernetzungsreaktion bis zur Wasserunlöslichkeit des Vernetzungsreaktionsprodukts weitergeführt wird.

11. Polymer-Material nach einem der Ansprüche 1 bis 10, dadurch gekennzeichnet, daß das Vernetzungsreaktionsprodukt wasserquellbar ist.

12. Polymer-Material nach einem der Ansprüche 1 bis 11, dadurch gekennzeichnet, daß es in einer Vernetzungsreak- tion in Gegenwart von freiem Monomer und/oder Präpolymer der Agentien erhalten wird.

13. Polymer-Material nach einem der Ansprüche 1 bis 12, dadurch gekennzeichnet, daß die Vernetzungsreaktion eine Polymerisations-, eine Polykondensations- oder Polyadditionsreaktion ist.

14. Polymer-Material nach einem der Ansprüche 1 bis 13, dadurch gekennzeichnet, daß die funktionellen Gruppen der Polysaccharide und/oder Polypeptide vor der Derivatisierung zum Teil mit Schutzgruppen blockiert sind.

15. Polymer-Material nach einem der Ansprüche 1 bis 14, dadurch gekennzeichnet, daß als derivatisierte Polysaccharide und/oder Polypeptide und teilweise solche Derivatisierungsprodukte verwendet werden, welche unterschiedliche vernetzbare Gruppen umfassen, gegebenenfalls in derselben Molekülkette, welche unterschiedlichen Vernetzungsreaktionstypen zugänglich sind.

## Claims

1. Biodegradable, water-resistant polymer material in the form of foils, films, strips, masses, molded articles or the like, produced in a process comprising the steps:
a) at least partially derivatizing polysaccharides and/or polypeptides at their hydroxyl, amino, imino, thiol and/or carboxyl groups in a non-radical reaction with an agent including cross-linkable groups to form an uncrosslinked reaction product and
b) converting the uncrosslinked reaction product from step a) to form a product of cross-linking reaction by cross-linking the cross-linkable groups.

2. Polymer material as defined in claim 1, characterized in that the cross-linkable groups include acrylic and/or methacrylic residues.

3. Polymer material as defined in claim 2, characterized in that the agents include glycidyl acrylate and/or glycidyl methacrylate.

4. Polymer material as defined in any of claims 1 to 3, characterized in that the polypeptides are of collagenic origin, in particular gelatin, animal glues, collagen or collagen hydrolysate and/or whey proteins, caseins, vegetable proteins, in particular soybean proteins.

5. Polymer material as defined in any of claims 1 to 4, characterized in that on average at least 10 cross-linkable groups are present per 1000 monosaccharides or amino acids of the polysaccharide or polypeptide chains.

6. Polymer material as defined in any of claims 1 to 5, characterized in that the cross-linkable groups of the polypeptide portion are linked to the peptide chain essentially exclusively via amino and carboxyl groups.

7. Polymer material as defined in any of claims 1 to 5, characterized in that the cross-linkable groups of the polypeptide portion are linked to the polypeptide chain essentially exclusively via carboxyl groups.

8. Polymer material as defined in any of claims 1 to 7, characterized in that on average up to 150 cross-linkable groups are present per 1000 amino acids of the polypeptide chain.

9. Polymer material as defined in any of claims 1 to 8, characterized in that the polysaccharide portions are cross-linked with the polypeptide portions.

10. Polymer material as defined in any of claims 1 to 9, characterized in that the cross-linking reaction is continued until the product of cross-linking reaction becomes water-insoluble.

11. Polymer material as defined in any of claims 1 to 10, characterized in that the product of cross-linking reaction is swellable in water.

12. Polymer material as defined in any of claims 1 to 11, characterized in that it is obtained in a cross-linking reaction in the presence of a free monomer and/or prepolymer of the agents.

13. Polymer material as defined in any of claims 1 to 12, characterized in that the cross-linking reaction is a reaction of polymerization, of polycondensation or polyaddition.

14. Polymer material as defined in any of claims 1 to 13, characterized in that the functional groups of the polysaccharides and/or polypeptides are partly blocked by protective groups prior to the derivatization.

15. Polymer material as defined in any of claims 1 to 14, characterized in that such derivatization products including different cross-linking groups, if necessary in the same molecular chain, accessible to different cross-linking reaction types are partially used as derivatized polysaccharides and/or polypeptides.

## Revendications

1. Matière polymère biodégradable et résistante à l'eau, se présentant sous forme de feuilles, de films, de rubans, de masses, d'articles moulés ou similaires, obtenue selon un procédé comportant les étapes suivantes:
a) une dérivatisation, au moins partielle, de polysaccharides et/ou de polypeptides à leurs groupes hydroxyle, amino, imino, thiol et/ou carboxyle dans une réaction non radicalaire avec des agents qui comprennent des groupes réticulables, en un produit réactionnel non réticulé et
b) une transformation du produit réactionnel non réticulé obtenu à l'étape a), en réticulant les groupes réticulables en un produit réactionnel réticulé.

2. Matière polymère selon la revendication 1, caractérisée en ce qu'elle comprend les groupes réticulables de radicaux acryle et/ou méthacryle.

3. Matière polymère selon la revendication 2, caractérisée en ce que les agents comprennent les acrylates de glycidyle et/ou les méthacrylates de glycidyle.

4. Matière polymère selon l'une quelconque des revendications 1 à 3, caractérisée en ce que les polypeptides sont des matériaux collagéniques, en particulier la gélatine, les colles animales, le collagène ou un hydrolysat de collagène et/ou les protéines de lactosérum, la caséine, les colles végétales, en particulier les protéines de soja.

5. Matière polymère selon l'une quelconque des revendications 1 à 4, caractérisée en ce qu'il existe en moyenne au moins 10 groupes réticulables par 1000 monosaccharides ou amino-acides des chaînes de polysaccharides ou de polypeptides.

6. Matière polymère selon l'une quelconque des revendications 1 à 5, caractérisée en ce que les groupes réticulables du composant polypeptide sont liés pour l'essentiel exclusivement avec la chaîne de polypeptides par l'intermédiaire de groupes amino et carboxyle.

7. Matière polymère selon l'une quelconque des revendications 1 à 5, caractérisée en ce que les groupes réticulables du composant polypeptide sont liés pour l'essentiel exclusivement avec la chaîne de polypeptides par l'intermédiaire de groupes carboxyles.

8. Matière polymère selon l'une quelconque des revendications 1 à 7, caractérisée en ce qu'il existe en moyenne jusqu'à 150 groupes réticulables par 1000 amino-acides des chaînes de polypeptides.

9. Matière polymère selon l'une quelconque des revendications 1 à 8, caractérisée en ce que les composants polysaccharides sont réticulés avec les composants polypeptides.

10. Matière polymère selon l'une quelconque des revendications 1 à 9, caractérisée en ce que la réaction de réticulation se poursuit jusqu'à l'insolubilité dans l'eau du produit réactionnel de réticulation.

11. Matière polymère selon l'une quelconque des revendications 1 à 10, caractérisée en ce que le produit réactionnel de réticulation présente une aptitude au gonflement dans de l'eau.

12. Matière polymère selon l'une quelconque des revendications 1 à 11, caractérisée en ce qu'elle est obtenue dans une réaction de réticulation en présence d'un monomère libre et/ou d'un prépolymère des agents.

13. Matière polymère selon l'une quelconque des revendications 1 à 12, caractérisée en ce que la réaction de réticulation est une réaction de polymérisation, de polycondensation ou de polyaddition.

14. Matière polymère selon l'une quelconque des revendications 1 à 13, caractérisée en ce que les groupes fonctionnels de polysaccharides et/ou de polypeptides sont partiellement bloqués avant la dérivatisation avec des groupes protecteurs.

15. Matière polymère selon l'une quelconque des revendications 1 à 14, caractérisée en ce que l'on utilise en tant que polysaccharides et/ou polypeptides dérivatisés, et partiellement, de tels produits de dérivatisation comportant des groupes réticulables différents, le cas échéant dans la même chaîne moléculaire, qui sont accessibles à différents types de réaction de réticulation.
